## Europäisches Patentamt
## European Patent Office
## Office européen des brevets

(11) Numéro de publication: **0 078 732 B1**

(12) # FASCICULE DE BREVET EUROPEEN

(45) Date de publication du fascicule du brevet:
**27.12.85**

(51) Int. Cl.⁴: **C 03 B 37/02**, C 03 B 37/025, C 03 B 37/03

(21) Numéro de dépôt: 82401950.9

(22) Date de dépôt: **22.10.82**

(54) **Procédé d'obtention d'un objet à structure chiralique issu de l'étirage à partir d'une source de matière ramollie, et dispositif mettant en oeuvre ce procédé.**

(30) Priorité: **03.11.81 FR 8120595**

(43) Date de publication de la demande:
**11.05.83 Bulletin 83/19**

(45) Mention de la délivrance du brevet:
**27.12.85 Bulletin 85/52**

(84) Etats contractants désignés:
**DE GB NL SE**

(56) Documents cités:
**DE - A - 2 855 337**
**DE - B - 3 010 005**
**US - A - 2 690 628**
**US - A - 3 902 089**

(73) Titulaire: **THOMSON-CSF, 173, Boulevard Haussmann, F-75379 Paris Cedex 08 (FR)**

(72) Inventeur: **Arditty, Hervé, THOMSON-CSF SCPI 173, bld Haussmann, F-75379 Paris Cedex 08 (FR)**
Inventeur: **Bourbin, Yannic, THOMSON-CSF SCPI 173, bld Haussmann, F-75379 Paris Cedex 08 (FR)**
Inventeur: **Dubos, Jacques, THOMSON-CSF SCPI 173, bld Haussmann, F-75379 Paris Cedex 08 (FR)**
Inventeur: **Gauthier, Francis, THOMSON-CSF SCPI 173, bld Haussmann, F-75379 Paris Cedex 08 (FR)**
Inventeur: **Graindorge, Philippe, THOMSON-CSF SCPI 173, bld Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

BUNDESDRUCKEREI BERLIN

## Description

La présente invention se rapporte à un procédé d'obtention d'un objet étiré à partir d'une source de matière ramollie présentant une structure chiralique et à un dispositif de mise en œuvre de ce procédé.

Cet objet étiré a une section quelconque; ce peut être, par exemple, une fibre optique. C'est le cas qui sera considéré à titre non limitatif dans la suite de la demande de brevet.

Les fibres monomodes fabriquées habituellement pour les télécommunications présentent toujours un peu de biréfringence linéaire, et de biréfringence circulaire. Par suite ces fibres ne conservent ni la polarisation linéaire, ni la polarisation circulaire.

Il est possible de rendre la fibre très biréfringente linéaire en cassant la symétrie circulaire au profit d'une symétrie planaire.

Il est également possible de considérer une méthode inverse, qui consiste à introduire une biréfringence circulaire, ou pouvoir rotatoire, élevée de façon à conserver la polarisation circulaire.

Une solution pour créer cette polarisation circulaire consiste à soumettre la fibre de verre à une contrainte statique de torsion, par exemple appliquée extérieurement par torsion entre ses deux extrémités: un effet de la torsion de cette fibre est d'introduire une biréfringence circulaire dans celle-ci.

La présente invention a pour objet un procédé de fabrication de type permettant un état de torsion induit par une contrainte de torsion appliquée de façon transitoire. Elle permet de mémoriser une structure hélicoïdale ou structure chiralique de cette fibre.

Pour la fabrication d'une fibre optique, les techniques verrières les plus classiques consistent à fondre les matières premières de départ, à les affiner et à les fibrer en tirant sur le matériau en fusion. Mais plutôt que de partir d'un état fondu, on préfère le plus souvent partir d'une préforme qui annonce, à une homothétie près la géométrie de la fibre désirée qu'il suffira alors d'étirer.

Ainsi dans le système des fibres de verre de silice dopée, un moyen de fabrication de cette fibre déjà proposé consiste à faire tourner la préforme à très grande vitesse dans le four d'étirage.

C'est ainsi que le document »Navy Technical Disclosure Bulletin«, volume 5, numéro 12, décembre 1980, pages 7 à 12 décrit un mode de fabrication d'une fibre optique à partir d'une préforme par étirage et torsion simultanés, puis par la trempe par refroidissement de l'état de contrainte induit dans la fibre.

Ces procédés présentent de nombreux inconvénients: comme la préforme n'est pas un cylindre parfait, sa mise en rotation à l'état visqueux fondu entraîne la création de défauts dans la fibre. En faisant tourner la préforme, du fait de la force centrifuge, le matériau à l'état mou attiré vers l'extérieur subit une déformation latérale; en effet, la préforme qui est un barreau de verre de 40 à 100 centimètres de long a une masse importante. En outre l'effet de précession est lui aussi important. Aussi le spectre de défaut obtenu pour la fibre n'est pas le spectre recherché.

Les procédés de fabrication de fibres qui n'utilisent pas de préformes, par exemple le procédé du double creuset dans lequel on utilise pour fabriquer une fibre optique un double creuset dans lequel on place le verre de gaine à la partie externe et le verre de cœur à l'intérieur, ces matières premières étant fondues, affinées et étirées, ne peuvent bénéficier de ce procédé consistant à faire tourner la préforme vues les difficultés qu'il y aurait à faire tourner le double creuset.

Selon une autre technique de fabrication, on ne fait pas tourner la préforme mais la fibre. La demande de brevet allemand DE-B-3 010 005 décrit la fabrication d'une fibre par étirage et torsion à partir d'une préforme. Mais l'étirage et la torsion ne s'opèrent pas simultanément, et, notamment, la torsion de la fibre fondue ne remonte pas jusqu'à la préforme. Par ailleurs, la conservation de l'état de torsion se fait par utilisation d'un matériau suffisamment rigide pour recevoir les forces résultant de couple de torsion induit.

Pour pallier ces inconvénients, l'objet de la présente invention est de réaliser une fibre présentant des qualités de conservation de la polarisation circulaire. Pour cela le procédé de réalisation de l'invention consiste à faire subir à la fibre, au cours de son fibrage, une torsion suivie d'une trempe qui permet de figer dans la structure une partie des contraintes de torsion ainsi obtenues, ce qui détruit la symétrie droite-gauche de la fibre classique. On crée ainsi une fibre chiralique. Du fait du procédé de l'invention, la partie relâchée de la tension de cisaillement qui ne participe pas à la contrainte figée uniformise la symétrie de rotation.

De plus ce procédé permet de réaliser des fibres par un moyen applicable à toutes les technologies de fabrication telles que le procédé de préforme, du double creuset, mais cette présente invention s'applique aussi à tout objet que l'on veut étirer et tordre, tout en désirant figer l'état de l'objet ainsi obtenu.

L'invention a pour objet un procédé d'obtention d'un objet à structure chiralique issu de l'étirage à partir d'une source de matière ramollie comportant une étape consistant, simultanément: en un étirage d'un objet à partir de la source de matière ramollie, la source étant fixée par une première extrémité à un bâti et étant raccordée par une deuxième extrémité à l'objet; une mise en rotation, d'axe confondu avec l'axe d'étirage (XX') de l'objet, de cet objet en sa partie solidifiée; ladite source étant de forme générale conique, et sa première extrémité étant la base du cône, de telle sorte que le couple de torsion créé lors de la rotation soit retransmis au cône de matière ramollie, l'étape d'étirage et de rotation comportant en outre une trempe par refroidissement de la partie de l'objet comprise à partir de la deuxième extrémité de la source vers la partie solidifiée de l'objet, de l'état de contrainte induit par torsion.

Elle a, en outre, pour objet un dispositif de mise en œuvre d'un tel procédé, comme indiqué dans la revendication 2.

L'invention sera mieux comprise, et d'autres caractéristiques apparaitront au moyen de la description qui suit, en se reportant aux figures qui l'accompagnent, parmi lesquelles:

— la figure 1 illustré schématiquement le procédé de l'invention;
— les figures 2 et 3 illustrent une vue latérale et une vue en projection du dispositif de l'invention;
— la figure 4 représente un exemple de réalisation contrète du dispositif de l'invention.

L'objet étiré peut avoir une section quelconque, et il peut être en différents matériaux: verre organique ou minéral, plastique, métal par exemple.

Dans la suite de la description, on considérera une fibre, mais cela n'est aucunement limitatif.

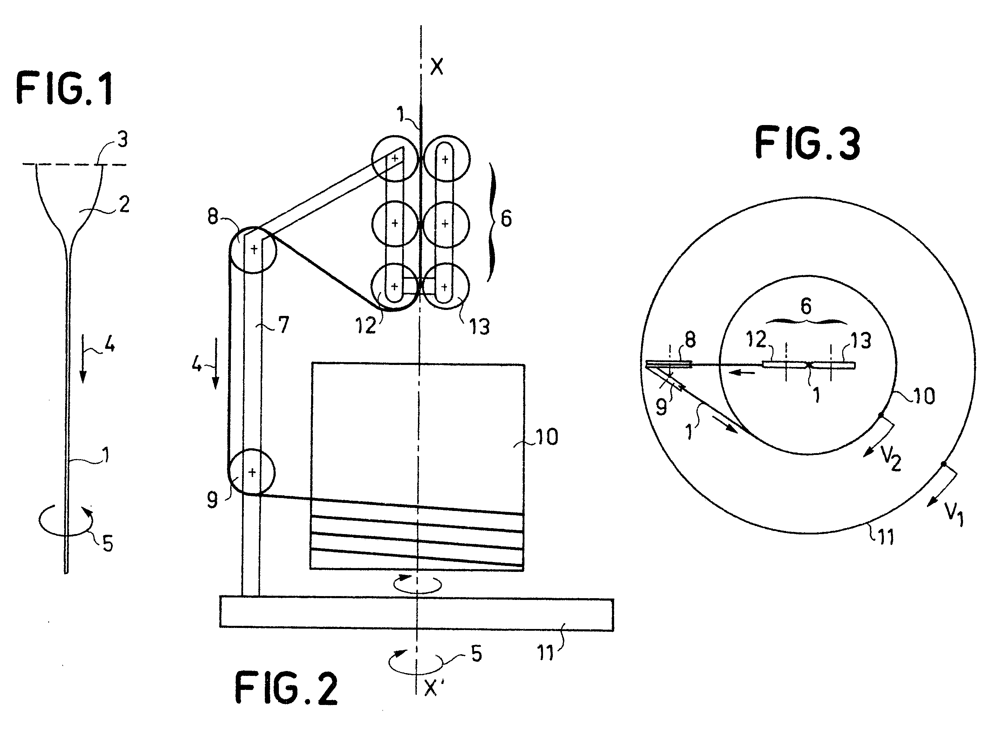

L'invention sera mieux comprise en se référant à l'illustration de la figure 1.

L'invention permet de considérer la base du volume d'étirage comme étant fixe, généralement il s'agit d'un cône visqueux à partir duquel on forme la fibre par toute technique appropriée de l'art connu, et de tordre ce cône et la fibre en cours de fabrication par rotation axiale de la fibre ellemême. La source de matière et les moyens de formage n'ont pas été représentés pour simplifier la figure.

On considère dans la suite de la description le procédé de fabrication utilisant une préforme, mais ceci n'est pas limitatif, tout autre procédé de fabrication est lui aussi possible.

D'après la figure 1, la fibre 1 est formée par étirage et torsion simultanés à partir du volume d'étirage 2, la base 3 de ce volume n'étant affectée d'aucun mouvement angulaire.

Cette base 3 est considérée comme une surface de référence tout au long de la mise en œuvre du procédé de l'invention, la préforme est bien évidemment comme dans les dispositifs de l'art connu, déplacée dans la direction d'étirage 4 de la fibre pour être positionnée à l'intérieur des moyens qui permettent d'amollir l'extrémité de cette préforme. Ces moyens peuvent être des moyens de chauffage, par exemple un four.

Si l'on tord l'extrémité de la fibre, celle-ci va se déformer, et le couple de torsion va être transmis de l'extrémité de la fibre vers le volume d'étirage. On peut donc effectuer un nombre de tours déterminé sur la longueur de la fibre. Si ce volume d'étirage était fixe et rigide, au bout d'un certain nombre de tours de rotation, la fibre casserait, ayant atteint ses limites de résistance élastique.

Mais ici l'extrémité du volume d'étirage est un cône visqueux qui lorsque le couple de torsion lui est appliqué crée un couple résistant. Il y a donc un équilibre qui se crée entre entre le couple de torsion et le couple visqueux résistant.

Si l'on continue à tordre la fibre à son extrémité, le cône va se déformer et vriller du nombre de tours imposé à l'extrémité de la fibre.

Il y a simultanément à ce mouvement de rotation du cône visqueux, un mouvement d'étirage de la fibre.

Le résultat désiré est qu'à une certaine longueur de fibre étirée corresponde un nombre de tours de torsion de celle-ci.

Ainsi pendant la mise en équilibre du processus il y a augmentation de la valeur du couple de torsion de la fibre et ensuite seul le cône visqueux situé à l'extrémité de ce volume d'étirage va subir ce couple de torsion et se vriller.

A l'équilibre la longueur de fibre située entre l'extrémité de la fibre subissant la rotation et l'étirage et le cône visqueux est torsadée du nombre de tours connu et constant choisi, et le cône visqueux se vrille sous l'effet d'un couple constant.

La fibre est donc torsadée et étirée, elle est alors simultanément trempée pour figer l'état de haute température.

Un dispositif de torsion d'une fibre pour conserver la polarisation circulaire induite selon le procédé illustré à la figure 1 est schématisé par les figures 2 et 3. La figure 2 est une vue latérale de ce dispositif, la fibre étant tirée verticalement de haut en bas et bobinée horizontalement dans le cadre non limitatif de cet exemple.

La figure 3 est une vue en projection du dispositif suivant l'axe d'étirage et de rotation, vu du côté fibrage.

D'après les figures 2 et 3, la fibre 1 provenant des moyens de formage (non représentés) est pincée dans les galets 12 et 13 du dispositif de tenue 6 entre lesquels elle défile pour être déviée vers les poulies 8 et 9. La poulie 9 peut se translater pour assurer la trancanage de la fibre sur le tambour d'enroulement à axe vertical 10. L'ensemble des galets du dispositif de tenne 6 et des poulies de renvois 8 et 9 est solidaire d'un plateau 11 dont l'axe de rotation XX' est vertical et confondu avec l'axe XX' d'étirage de la fibre 1, à la sortie des moyens de formage. L'axe de rotation du tambour est lui aussi confondu avec cet axe XX'. C'est le cas que l'on considère dans la suite de la description. Mais il pourrait en être différemment dans d'autres types de réalisations. La rotation de l'ensemble formé par le portique 7 qui soutient les poulies et galets et du plateau 11 assure la torsion de la fibre tandis que la rotation du tambour 10 assure l'étirage et l'enroulement.

Les galets 12 et 13 peuvent être tout autre dispositif de pincement permettant l'étirage de la fibre. Ils peuvent être revêtus d'une couche d'un matériau antiglissement: tel qu'un caoutchouc élastomère, du silicone, du néoprène . . .

pour assurer une bonne adhérence sur la fibre.

Les poulies de renvoi 8 et 9 solidaires du portique en rotation permettent de bobiner la fibre sur le tambour central 10.

Si le tambour 10 et l'ensemble »plateau 11—portique 7« tournent à la même vitesse il n'y a pas enroulement de la fibre 1 sur le tambour 10. Par contre si le tambour 10 est maintenu à l'arrêt, à un tour de torsion de la fibre 1 correspond un tour d'enroulement de cette fibre 1 sur le tambour 10. Mais le résultat désiré est d'obtenir un grand nombre de tours de la fibre par mètre.

Aussi, si le plateau 11 tourne à une vitesse $V_1$, il tord la fibre à la même vitesse angulaire. Pour pouvoir ajuster le nombre de tours par mètre de fibre produite, on choisit la vitesse $V_2$ du tambour 10 qui permet de déterminer ainsi la vitesse d'enroulement $v = V_1 - V_2$ (ou vitesse de fibrage si elle est exprimée linéairement).

Par les moyens de l'invention, on peut réaliser des fibres ayant figé entre 1 et 1000 tours de torsions par mètre. Les vitesses de fibrage peuvent être réglées entre 1 et 100 m/min.

On peut figer une partie appréciable des contraintes, dues au cisaillement par torsion, ce qui crée dans la fibre un pouvoir rotatoire optique.

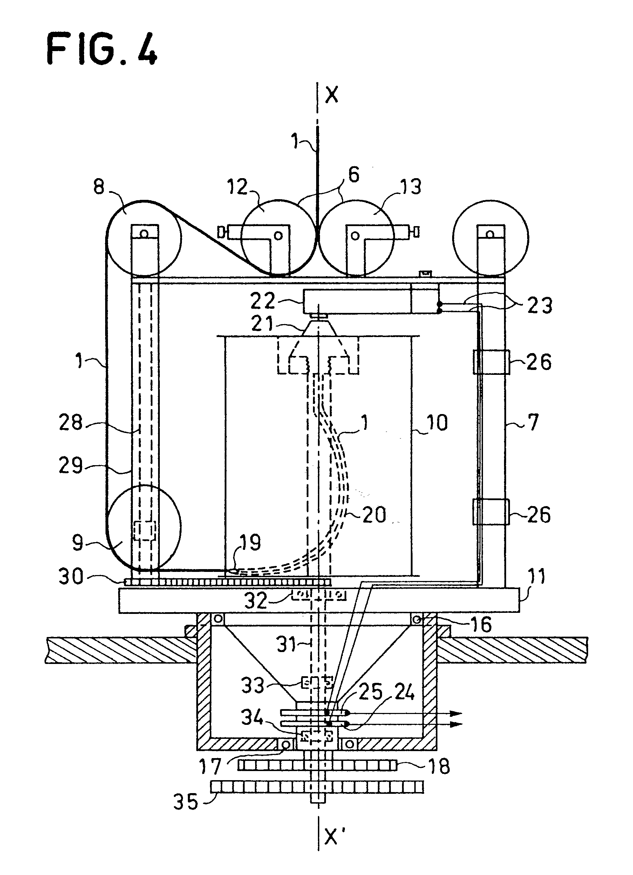

La figure 4 est un schéma d'un exemple de réalisation concrète de l'invention.

Le dispositif réalisé comporte un plateau 11 supportant un portique 7 lequel maintient un dispositif de tenue 6 de la fibre 1 comportant deux poulies au moins dont on a figuré les éléments 12 et 13.

Ces deux poulies sont munies d'un dispositif presseur à ressort réglable en pression permettant de centrer la fibre 1 dans l'axe XX' de fibrage.

La fibre est renvoyée par la poulie 8 sur la poulie 9 qui assure le guidage sur le tambour récepteur 10 concentrique au plateau 11 et le trancanage par translation à l'aide d'une vis mère 28 placée dans la coulisse verticale 29. La vis mère 28 est commandée par une courroie 30 crantée, entraînée par une transmission à poulie de démultiplication adéquate entraînée par l'axe du tambour 10.

L'axe moteur 31 guidé par les roulements 32, 33 et 34, entraîné par la poulie 35 assure la rotation du tambour 10 et de la vis mère 28.

Le plateau 11 tourne sur les roulements 16 et 17 et est entraîné par la poulie 18.

L'entraînement des poulies 35 et 18 est assuré, par un moteur à courant continu régulé en vitesse, à l'aide de deux transmissions à poulie et à courroie crantée de démultiplication adéquate non représentées sur cette figure.

La tambour récepteur 10 comporte un dispositif de guidage de la fibre composée d'un orifice 19, d'un tube 20, et d'un moyeu 21 percé dans son axe permettant à la fibre d'arriver au photodétecteur 22 solidaire du portique 7.

Dans certains dispositifs de fabrication de fibre tels la préforme, il y a au niveau du four un spectre d'émission, ce qui permet de surveiller le niveau de lumière à l'extrémité de la fibre. On peut donc disposer à cet endroit un photodétecteur 22 qui peut être, par exemple, un photomultiplicateur.

Ce photodétecteur 22 permet de contrôler le niveau de lumière transmise par la fibre en cours de fabrication pour détecter un accident éventuel dans le cas d'un procédé de fusion par exemple, où la préforme ou le verre fondu émet de la lumière. Ainsi, s'il y a création d'une bulle dans la fibre il y aura, une discontinuité de la variation de l'intensité lumineuse.

Des connexions électriques 23 alimentent en courant le photodétecteur et en recueillent les informations par l'intermédiaire des contacts tournants 24 et 25.

L'équilibrage dynamique de la machine est assuré par des masses 26 et est grandement facilité par la conception coaxiale du tambour 10, du plateau 11 et du portique 7.

On a ainsi un système autoéquilibré en rotation.

Pour régler les vitesses $V_2$ du tambour 10 et $V_1$ de l'ensemble »plateau 11—portique 7«, et le pas de trancanage on joue sur les rapports de démultiplication des poulies d'entrainement mais il serait tout aussi possible de piloter chacun de ces trois systèmes par des circuit électriques de commande séparés et asservis entre eux.

On peut bien entendu disposer le long de l'axe d'étirage de la fibre, entre le volume d'étirage et les galets de pincement tous les moyens utilisés dans l'art connu pour la fabrication de fibres.

On peut ainsi introduire un dispositif d'enduction de la fibre, pour la recouvrir d'un revêtement de protection.

Mais dans ce cas il ne faut pas que le couple résistant au niveau du dispositif introduit soit supérieur au couple de torsion de la fibre. Il faut en effet que ce couple de torsion puisse agir au niveau du cône visqueux du volume d'étirage. Sinon dans ce cas on aurait vrillé la fibre jusqu'à l'enducteur seulement, et non pas obtenu une fibre torsadée.

Dans le dispositif de l'invention il n'y a pas de torsion supplémentaire à celle qui est désirée; c'est un enroulement sans torsion.

Il est intéressant de réguler le diamètre de la fibre, sinon un défaut de diamètre de la préforme se traduit par un défaut de diamètre au niveau de la fibre. On dispose alors un capteur de diamètre de fibre à la sortie du four, la fibre étant alors nue, c'est à dire n'ayant pas reçu de revêment de protection. On obtient alors un signal proportionnel au diamètre de la fibre que l'on utilise pour réguler le débit de verre en sortie du four, en régulant la vitesse de fibrage. Sans cette régulation, en effet, le débit de verre à l'entrée du four serait inégal au débit de verre à sa sortie, et la fibre aurait des fluctuations de diamètre directement proportionnels aux variations de diamètre de la préforme.

En fonction du choix du sens de la torsion de la fibre au moment de sa fabrication, on obtient un pouvoir rotatoire gauche ou droit de la polarisation.

Les fibres ainsi obtenues peuvent servir à la réalisation de capteurs à fibre optique de types divers, par exemple de capteurs de courant électrique.

**Revendications**

1. Procédé d'obtention d'un objet à structure chiralique issu de l'étirage à partir d'une source (2) de matière ramollie, comportant une étape consistant, simultanément: en un étirage (4) d'un objet (1) à partir de la source (2) de matière ramollie, la source étant fixée par une première extrémité (3) à un bâti et étant raccordée par une deuxième extrémité à l'objet (1); une mise en rotation (5), d'axe confondu avec l'axe d'étirage (XX') de l'objet (1), de cet objet (1) en sa partie solidifiée, caractérisé en ce que la source (2) est de forme générale conique, la première extrémité (3) de la source étant la base du cône, de telle sorte que le couple de torsion créé lors de la rotation soit retransmis au cône de matière ramollie, l'étape d'étirage et de rotation comportant en outre une trempe par refroidissement de la partie de l'objet (1) comprise à partir de la deuxième extrémité de la source (2) vers la partie solidifiée de l'objet, de l'état de contrainte induit par torsion.

2. Dispositif permettant d'obtenir un objet étiré (1) de structure chiralique selon le procédé tel que décrit à la revendication 1, comportant des moyens de tenue (6), des moyens de guidage et de défilement (8, 9) de la partie solidifiée de l'objet étiré (1) issu d'une source de matière ramollie, des moyens d'étirage et d'enroulement de cet objet; cet étirage ayant lieu suivant un axe d'étirage (XX'), caractérisé en ce qu'il comporte en outre un portique (7) solidaire d'un disque (11) d'assise mobile en rotation autour de l'axe d'étirage (XX'); les moyens de tenue (6) étant supportés par a portique et situés selon l'axe d'étirage (XX'), les moyens de guidage et de défilement (8, 9) étant solidaires de ce disque (11) et décentrés par rapport à l'axe d'étirage (XX'); les moyens d'étirage et d'enroulement de l'objet étiré (1) comportant un tambour (10) monté sur le disque (11) ayant son axe de rotation confondu avec l'axe d'étirage (XX') de l'objet étiré (1), le tambour (10) et le disque (11) ayant des vitesses angulaires différentes; cette rotation permettant d'imprimer une torsion à l'objet étiré pour laisser subsister après la trempe un état de contrainte résiduelle.

3. Dispositif selon la revendication 2, caractérisé en ce que les moyens de tenue (6) comportent un revêtement antiglissement.

4. Dispositif selon la revendication 2, caractérisé en ce que les moyens de tenue (6) sont des poulies disposées de part et d'autre de l'objet étiré (1).

5. Dispositif selon la revendication 2, caractérisé en ce que les moyens de tenue (6) sont des galets disposés de part et d'autre de l'objet étiré.

6. Dispositif selon la revendication 2, caractérisé en ce que les moyens de guidage et défilement comportant des poulies (8, 9) sur lesquelles repose l'objet étiré (1), l'une (9) des poulies étant une poulie de trancanage qui permet l'enroulement de l'objet étiré (1) sur le tambour (10).

7. Dispositif selon la revendication 2 comportant un objet étiré (1) transmettant la lumière, caractérisé en ce qu'il comprend des moyens de détection de la lumière, ces moyens comprenant un photodétecteur couplé à l'extrémité de l'objet étiré, le tambour (10) comportant un orifice (19), un tube (20) et un moyeu (21) percé dans son axe permettant à l'extrémité de l'objet étiré d'être couplée à ce photodétecteur (22) solidaire du portique (7), des connexions électriques (23) alimentant en courant ce photodétecteur (22) et en recueillant les informations par l'intermédiaire de contacts tournants (24, 25).

8. Dispositif selon la revendication 2, caractérisé en ce que des masses (26) assurant l'équilibrage dynamique du dispositif sont disposées sur le portique (7).

9. Dispositif selon la revendication 2, caractérisé en ce que la source de matière est une préforme.

10. Dispositif selon la revendication 2, caractérisé en ce que la source de matière comprend au moins un creuset contenant de la matière ramollie.

11. Dispositif selon l'une quelconque des revendications 2 à 10, caractérisé en ce que l'objet étiré (1) est une fibre optique.

**Patentansprüche**

1. Verfahren zur Erzeugung eines Gegenstandes mit Spiralstruktur durch Ziehen aus einer Quelle (2) erweichten Materials, mit einem Verfahrensschritt, bei dem gleichzeitig ein Ziehen (4) eines Gegenstandes (1) aus einer Quelle (2) erweichten Materials erfolgt, wobei die Quelle mit einem ersten Ende (3) an einem Gerüst befestigt und mit einem zweiten Ende an den Gegenstand (1) angelegt ist, und ein Drehen (5) des Gegenstands (1) in seinem erhärteten Bereich erfolgt, wobei die Drehachse mit der Ziehachse (XX') des Gegenstands zusammenfällt, dadurch gekennzeichnet, daß die Quelle (2) eine im allgemeinen konische Form aufweist und das erste Ende (3) der Quelle die Basis des Konus bildet, so daß das Torsionsmoment, das bei der Drehung gebildet wird, auf den Konus erweichten Materials weiter übertragen wird, und daß der Zieh- und Drehvorgang außerdem eine Härtung durch Abkühlung des Teils des Gegenstands (1) einschließt, der zwischen dem zweiten Ende der Quelle (2) und dem erhärteten Bereich des Gegenstands liegt, so daß der durch die Torsion erzeugte Spannungszustand behoben wird.

2. Vorrichtung zur Erzeugung eines gezogenen Gegenstands (1) spiralförmiger Struktur gemäß dem Verfahren nach Anspruch 1, mit Mitteln zum Halten (6), zur Führung und Lenkung (8, 9) des erhärteten Teils des gezogenen Gegenstands (1), ausgehend von einer Quelle erweichten Materials, mit Mitteln zum Ziehen und mit Mitteln zum Aufrollen des Gegenstands, wobei das Ziehen in Richtung einer Ziehachse (XX') erfolgt, dadurch gekennzeichnet, daß sie außerdem einen Tragebalken (7) aufweist, der mit einer Lagescheibe (11) fest verbunden ist und mit dieser um die Ziehachse (XX') drehbar ist, wobei die Haltemittel (6) von diesem Balken getragen werden und in der Ziehachse (XX') liegen, daß die Führungs- und Lenkungsmittel (8, 9) mit der Scheibe (11) fest verbunden sind und bezüglich der Ziehachse (XX') exzentrisch liegen, daß die Mittel zum Ziehen und zum Aufrollen des gezogenen Gegenstands (1) eine Trommel (10) aufweisen, die auf der Scheibe (11) montiert ist und deren Drehachse mit der Ziehachse (XX') des gezogenen Gegenstands (1) zusammenfällt, und daß die Trommel (10) und die Scheibe (11) unterschiedliche Winkelgeschwindigkeiten besitzen, so daß durch die Drehung dem gezogenen Gegenstand eine Torsion verliehen wird, derart, daß nach dem Härten eine Restspannung erhalten bleibt.

3. Vorrichtung nach Anspruch 2, dadurch gekennzeichnet, daß die Haltemittel (6) einen Antirutschbelag aufweisen.

4. Vorrichtung nach Anspruch 2, dadurch gekennzeichnet, daß die Mittel zum Halten (6) auf beiden Seiten des gezogenen Gegenstands (1) angeordnete Rollen sind.

5. Vorrichtung nach Anspruch 2, dadurch gekennzeichnet, daß die Mittel zum Halten (6) auf beiden Seiten des gezogenen Gegenstands angeordnete Zylinder sind.

6. Vorrichtung nach Anspruch 2, dadurch gekennzeichnet, daß die Mittel zur Führung und zur Lenkung Rollen (8, 9) aufweisen, auf denen der gezogene Gegenstand (1) liegt, wobei eine der Rollen (9) eine Wickelrolle ist, die das Aufwikkeln des gezogenen Gegenstands (1) auf die Trommel ermöglicht.

7. Vorrichtung nach Anspruch 2, die einen das Licht übertragenden gezogenen Gegenstand (1) aufweist, dadurch gekennzeichnet, daß sie Mittel zum Aufspüren des Lichts aufweist, die einen mit dem Ende des gezogenen Gegenstands (1) gekoppelten Photodetektor aufweisen, wobei die Trommel (10) eine Öffnung (19), ein Rohr (20) und eine in seine Achse gebohrte Nabe (21) aufweist, die es dem Ende des gezogenen Gegenstands ermöglichen, mit diesem mit dem Tragebalken (7) fest verbundenen Photodetektor (22) gekoppelt zu werden, wobei elektrische Verbindungen (23) diesen Photodetektor (22) mit Strom versorgen und die Information über Schleifkontakte (24, 25) davon abnehmen.

8. Vorrichtung nach Anspruch 2, dadurch gekennzeichnet, daß Massen (26), die das dynamische Gleichgewicht der Vorrichtung sichern, auf dem Tragebalken (7) angeordnet sind.

9. Vorrichtung nach Anspruch 2, dadurch gekennzeichnet, daß die Materialquelle ein Rohling ist.

10. Vorrichtung nach Anspruch 2, dadurch gekennzeichnet, daß die Materialquelle mindestens einen erweichtes Material enthaltenden Schmelztiegel aufweist.

11. Vorrichtung nach einem beliebigen der Ansprüche 2 bis 10, dadurch gekennzeichnet, daß der gezogene Gegenstand (1) eine Lichtleitfaser ist.

**Claims**

1. A method for obtaining an object with a chiralic structure resulting from drawing from a source (2) of softened material, comprising a step consisting simultaneously of drawing (4) of the object (1) from the source (2) of softened material, the source being fixed by its first end (3) to a frame and being connected by the second end to the object (1), putting the object (1) at its solidified part into rotation (5), the axis of rotation coinciding with the drawing axis (XX') of the object (1), characterized in that the source (2) has a substantially conical shape, the first end (3) of the source being the base of the cone, in such a way that the torsion couple created by the rotation is retransmitted to the cone of softened material, the drawing and rotation step further comprising a tempering by cooling that part of the object (1) which is included between the second end of the source (2) and the solidified part of the object, of the stress state induced by the torsion.

2. A device making it possible to obtain a drawn object (1) of a chiralic structure according to the method of claim 1, comprising hold means (6), means for guidance and passage (8, 9) of the solidified part of the drawn object (1) derived from the source of softened material, drawing and winding means for that object, the drawing being effected along a drawing axis (XX'), characterized in that it further comprises a beam (7) integral with a support disk (11) which is rotatable about the drawing axis (XX'), the hold means (6) being supported by said beam and being situated along the drawing axis (XX'), the means for guidance and passage (8, 9) being integral with said disk (11) and excentric with respect to the drawing axis (XX'), the drawing and winding means of the drawn object (1) comprising a drum (10) mounted on the disk (11), the drum rotation axis coinciding with the drawing axis (XX') of the drawn object (1), the drum (10) and the disk (11) having different angular speeds, this rotation making it possible to subject the drawn object to a torsion in order to leave a residual stress state after the tempering.

3. A device according to claim 2, characterized in that the hold means (6) comprise an antislip coating.

4. A device according to claim 2, characterized in that the hold means (6) are pulleys disposed on either side of the drawn object (1).

5. A device according to claim 2, characterized in that the hold means (6) are rollers disposed on either side of the drawn object.

6. A device according to claim 2, characterized in that the guidance and passage means comprise pulleys (8, 9) which bear the drawn object (1), one of the pulleys (9) being a wrapper pulley which permits the reeling up of the drawn object (1) on the drum (10).

7. A device according to claim 2 comprising a light transmitting drawn object (1), characterized in that it comprises means for detecting the light, these means comprising a photodetector coupled to the end of the drawn object (1), the drum (10) comprising an orifice (19), a tube (20) and a hub (21) bored into its axis permitting the end of the drawn object to be coupled to this photodetector (22) which is fixed to the beam (7), electrical connections (23) supplying current to this photodetector (22) and receiving the informations therefrom via wiping contacts (24, 25).

8. A device according to claim 2, characterized in that masses (26) ensuring the dynamic balance of the device are disposed on the beam (7).

9. A device according to claim 2, characterized in that the source of material is a blank piece.

10. A device according to claim 2, characterized in that the source of material comprises at least one melting pot containing softened material.

11. A device according to any one of claims 2 to 10, characterized in that the drawn object (1) is an optical fiber.

# FIG.1

# FIG.2

# FIG.3

0 078 732

# FIG. 4